# EUROPEAN PATENT APPLICATION

(11) **EP 2 308 925 A1**
(43) Date of publication of application: **13.04.2011**
(21) Application number: 09803055.4
(22) Date of filing: 31.07.2009
(51) Int. Cl.: C08L 25/04, C08L 23/26

(54) **COMPOSITION CONTAINING STYRENE RESIN, AND MOLDED ARTICLE**

(30) Priority: 31.07.2008 JP 2008198485
(71) Applicant: Du Pont-Mitsui Polychemicals Co., Ltd., Tokyo 105-7117 (JP)
(72) Inventor: SHINYA, Youichi, Ichihara-shi Chiba 299-0108 (JP); DATE, Kenichi, Ichihara-shi Chiba 299-0108 (JP); ISHII, Toshiyuki, Ichihara-shi Chiba 299-0108 (JP); FUKADA, Toru, Tokyo 105-7117 (JP)
(74) Representative: Gulde Hengelhaupt Ziebig & Schneider
(86) International application number: PCT/JP2009/063693
(87) International publication number: WO 2010/013817

(57) **Abstract**

Provided is a styrene-based resin-containing composition including (A) a polymer saponified product which is obtained by saponifying an ethylene-unsaturated carboxylic acid ester copolymer with potassium and has a potassium ion concentration in the range of 0.1 to 5.8 mol/kg, in an amount of 2 parts by mass or more and less than 100 parts by mass, and (B) a styrene-based resin, in an amount of more than 0 parts by mass and 98 parts by mass or less, the composition having a potassium ion concentration of 0.002 to 5.8 mol/kg.

## Description

### TECHNICAL FIELD

The present invention relates to a styrene-based resin-containing composition including a styrene-based resin and an alkali saponified product of an ethylene-unsaturated carboxylic acid ester copolymer having specific characteristics, and to a formed article.

### BACKGROUND ART

As electric elements have become common in consumer goods and industrial products formed of various plastics, synthesis fibers, synthesis papers and the like, demand for plastics having charge-preventing property as well as antistatic properties such as static electricity-removing property has been increased rapidly.
Those used as such antistatic plastics include ionomer resins.

An ionomer is a copolymer of ethylene and an unsaturated carboxylic acid which is partially neutralized with a metal, and it is known that an ionomer containing an alkali metal, specifically K, Rb or Cs ion shows excellent antistatic property due to its ion conductivity. Furthermore, it is known that a resin itself of an ionomer exhibits electroconductivity without treating with an antistatic additive (agent), and thereby retains charge-preventing effect semipermanently.

Therefore, many antistatic materials using an ionomer, and formed products and modified products thereof have already been suggested. For example, a charge-preventing material for polymers in which a polyhydric alcohol such as glycerin and trimethylolpropane has been incorporated in an ionomer of ethylene-unsaturated carboxylic acid copolymer containing an alkali metal such as potassium as an ion source is disclosed (for example, see Patent Document 1).

Furthermore, an ionomer composition consisting of a mixture containing a potassium ionomer of ethylene-unsaturated carboxylic acid copolymer having a neutralization degree of 60% or more to which a small amount of polyhydric alcohol-based compound or amino alcohol-based compound has been added, and an ethylene-(meth)acrylic acid ester-maleic acid monoester copolymer at a specific incorporation ratio, which has non-charging property which is specifically independent of humidity, is disclosed (for example, see Patent Document 2).
An injection-molded product of a resin composition including a potassium ionomer of an ethylene-(meth)acrylic acid random copolymer and a styrene-based polymer is disclosed (for example, see Patent Document 3).

Meanwhile, when prevention of charging, removal of static electricity and the like are main purposes, an ionomer having a certain level of an alkali metal neutralization degree, namely, one having a higher the alkali ion amount (alkali ion density) in the ionomer has higher antistatic property, is generally used.

It is known that a saponified product produced by saponifying an ethylene-(meth)acrylic acid ester copolymer has fine transparency (shows a low haze value), and that the saponified product is formed by co-extrusion with other polymer or laminated on a film of other polymer. As other polymer, a nylon, a polyester, a polyolefin, a polystyrene and the like are described. However, blending with these other polymers is not described (for example, see Patent Document 4).

It is disclosed that a mixture of a saponified product produced by saponifying an ethylene-(meth)acrylic acid ester copolymer and an ionomer of an ethylene-(meth)acrylic acid copolymer is excellent in mechanical properties and anticutting property. However, blending with other resin is not described (for example, see Patent Document 5).

It is also known that a composition having a low haze value which is produced by saponifying an ethylene-(meth)acrylic acid ester copolymer is blended with other polymer to adjust elasticity, impact resistance and shrinkage rate (for example, see Patent Document 6).

It is also known that a saponified product having a low haze value produced by saponifying an ethylene-(meth)acrylic acid ester copolymer is blended with a polypropylene, a high density polyethylene and an ethylene-acrylic acid alkyl ester copolymer to improve tensile strength, hot tack strength and seal strength (for example, see Patent Document 7).
Patent Document 1: Japanese Patent Application Laid-Open (JP-A) No. 08-134295
Patent Document 2: JP-A No. 2002-12722
Patent Document 3: Japanese Patent No. 3565892
Patent Document 4: U.S. Patent No. 5569722
Patent Document 5: Japanese Patent Application Publication (JP-B) No. 8-3004
Patent Document 6: U.S. Patent No. 5569712
Patent Document 7: U.S. Patent No. 5599877

### DISCLOSURE OF THE INVENTION

### PROBLEM TO BE SOLVED BY THE INVENTION

However, various conditions for production should be considered for neutralizing an ethylene-unsaturated carboxylic acid copolymer, which is a base resin, with a high neutralization degree, and for producing an uniform ionomer material, and thus the production thereof is not necessarily easy. Furthermore, some kinds of ionomers having a high neutralization degree do not necessarily satisfy flexibility and miscibility with other resin. Therefore, the application was limited in some cases.

Therefore, a new polymer material which is soft, excellent in miscibility with others such as a styrene-based resin, and excellent in antistatic property has been strongly demanded.

The present inventors have done intensive studies so as to satisfy the above-mentioned demand, and consequently found that, among alkali saponified products of an ethylene-unsaturated carboxylic acid ester copolymer, a saponified product having specific characteristics which is obtained by saponifying an ethylene-unsaturated carboxylic acid ester copolymer with potassium exhibits quite excellent antistatic property (non-charging property) and satisfies the above-mentioned requirements. Based on this finding, they have considered a composition with a styrene-based resin and completed the invention.

As mentioned above, a styrene-based resin-containing composition having excellent antistatic properties such as property of removing static electricity and charge-preventing property, and a formed article are required.

### MEANS FOR SOLVING THE PROBLEMS

The present invention provides <1> a
styrene-based resin-containing composition including (A) a polymer saponified product which is obtained by saponifying an ethylene-unsaturated carboxylic acid ester copolymer with potassium and has a potassium ion concentration in the range of 0.1 to 5.8 mol/kg, in an amount of 2 parts by mass or more and less than 100 parts by mass, and (B) a styrene-based resin, in an amount of more than 0 parts by mass and 98 parts by mass or less, the composition having a potassium ion concentration of 0.002 to 5.8 mol/kg.

<2> The styrene-based resin-containing composition as described in the above <1> is an exemplary embodiment, wherein when the composition is formed into a sheet having a thickness of 2 mm by injection molding, the sheet has a surface resistivity, which is measured under conditions of an applied voltage of 500 V and an application time of 10 seconds after aging at 23°C under 50% RH for 24 hours, of 1.0 × 10¹⁴ Ω/square or less.
<3> In the styrene-based resin-containing composition as described in the above <1> or <2>, it is preferable that the ethylene-unsaturated carboxylic acid ester copolymer to be saponified with potassium is an ethylene-(meth)acrylic acid ester copolymer.

<4> In the styrene-based resin-containing composition as described in any one of the above <1> to <3>, it is preferable that the content ratio of constituent units derived from the unsaturated carboxylic acid ester in the ethylene-unsaturated carboxylic acid ester copolymer to be saponified with potassium is in the range of 5 to 50% by mass.

<5> In the styrene-based resin-containing composition as described in any one of the above <1> to <4>, it is preferable that the styrene-based resin (B) is a styrene-based copolymer including at least constituent units derived from acrylonitrile and constituent units derived from styrene.

<6> In the styrene-based resin-containing composition as described in any one of the above <1> to <5>, it is preferable that the content ratio of the constituent units derived from the unsaturated carboxylic acid ester is in the range of 20 to 35% by mass.
<7> In the styrene-based resin-containing composition as described in any one of the above <1> to <6>, it is preferable that the content of the polymer saponified product (A) is 90 to 3 parts by mass, and the content of the styrene-based resin (B) is 10 to 97 parts by mass.
<8> In the styrene-based resin-containing composition as described in any one of the above <1> to <7>, it is preferable that the potassium ion concentration of the polymer saponified product (A) is in the range of 1 to 3 mol/kg.
<9> In the styrene-based resin-containing composition as described in any one of the above <1> to <8>, it is preferable that the saponification degree of the polymer saponified product (A) is in the range of 10 to 90%.

Furthermore, in the invention, a formed article which is excellent in antistatic property and formed by using a styrene-based resin-containing composition including 2 parts by mass or more and less than 100 parts by mass of the polymer saponified product (A) and more than 0 parts by mass and 98 parts by mass or less of the styrene-based resin (B) and having a potassium ion concentration of 0.002 to 5.8 mol/kg, is provided. In the invention, it is preferable that the formed article is an injection-molded product.

### EFFECTS OF THE INVENTION

The present invention may provide a styrene-based resin-containing composition which is excellent in antistatic properties such as property of removing static electricity, charge-preventing property and the like, and a formed article thereof. The styrene-based resin-containing composition of the invention is excellent in antistatic property, and has a surface resistivity measured by the following conditions, namely, a surface resistivity obtained by forming the composition into a sheet having a thickness of 2 mm, aging the sheet under a constant temperature and a constant humidity (23°C, 50% RH) for 24 hours and measuring under the conditions of an applied voltage of 500 V and an application time of 10 seconds, of 1.0 × 10¹⁴ Ω/square or less, preferably 1.0 × 10¹² Ω/square to 1.0 × 10³ Ω/square. Furthermore, the styrene-based resin-containing composition of the invention is excellent in miscibility with other resin.

Furthermore, the styrene-based resin-containing composition of the invention is excellent in antistatic property, and may be widely used for, specifically, materials for architectures and civil engineering such as ceiling materials and floor materials, automobile parts, office automation equipments, parts for home electronics or cases for storage and housing the parts, stationeries, commodities and the like. Furthermore, it may be preferably used for applications aiming at removal of static electricity to a higher level (about 10⁹ Ω/square or less), for example, utilization as a polymer type antistatic additive(agent) for antistatic applications for cases for carrying and storing precision electronic parts such as containers for controlling static electricity, electroconductive plastic cardboards and IC trays, charge-preventing applications for architectural materials for clean rooms, and the like.

### BEST MODES FOR CARRYING OUT THE INVENTION

Hereinafter, exemplary embodiments of the styrene-based resin-containing composition of the present invention are specifically explained in detail. However, the invention is not limited at all by these examples.

Examples of the ethylene-unsaturated carboxylic acid ester copolymer which is a material resin used for the polymer saponified product (A) of the invention may include copolymers of ethylene and an alkyl ester of unsaturated carboxylic acid such as alkyl esters of acrylic acid, alkyl esters of methacrylic acid, alkyl esters of ethacrylic acid, alkyl esters of crotonic acid, alkyl esters of fumaric acid, alkyl esters of maleic acid, monoalkyl esters of maleic acid, alkyl esters of maleic anhydride, alkyl esters of itaconic acid and alkyl esters of itaconic anhydride.

Examples of the alkyl group of the alkyl ester may include those having 1 to 12 carbons, and more specific examples may include alkyl groups such as a methyl, an ethyl, a n-propyl, an isopropyl, a n-butyl, an isobutyl, a sec-butyl, a 2-ethylhexyl and an isooctyl.
In the invention, as the unsaturated carboxylic acid ester, a methyl ester, an ethyl ester, an n-butyl ester and an isobutyl ester of acrylic acid or methacrylic acid are specifically preferable.
A specifically preferable ethylene-unsaturated carboxylic acid ester copolymer in the invention is an ethylene (meth)acrylic acid ester copolymer, specifically an ethylene-methyl acrylate copolymer, an ethylene-ethyl acrylate copolymer, an ethylene-n-butyl acrylate copolymer, an ethylene-isobutyl acrylate copolymer, an ethylene-methyl methacrylate copolymer, an ethylene-ethyl methacrylate copolymer, an ethylene-n-butyl methacrylate copolymer and an ethylene-isobutyl methacrylate copolymer are preferable.

The content ratio of the constituent units derived from the unsaturated carboxylic acid ester in the above-mentioned ethylene-unsaturated carboxylic acid ester copolymer before saponification is 5 to 50% by mass, and 20 to 35% by mass is specifically preferable. Namely, it is preferable that the content ratio of the constituent units derived from the unsaturated carboxylic acid ester is within this range, since the balance between antistatic property, flexibility and miscibility with other resin is excellent.
Furthermore, it is preferable that the melt flow rate of the above-mentioned ethylene-unsaturated carboxylic acid ester copolymer before saponification at 190°C under the loading of 2160 g (which complies with JIS K7210-1999) is within the range of 1 to 1300 g/10 min.
Furthermore, the above-mentioned ethylene-unsaturated carboxylic acid ester copolymer before saponification may be used as a mixture of two or more kinds.

Such ethylene-unsaturated carboxylic acid ester copolymer is produced by, for example, high pressure radical copolymerization which is known per se.

In the invention, the above-mentioned ethylene-unsaturated carboxylic acid ester copolymer is saponified with an alkali. Although examples of a metal ion of a caustic alkali used for saponification may include a lithium (Li), a sodium (Na), a potassium (K), a rubidium (Rb), a cesium (Cs) and the like, saponification is carried out by using potassium in the invention in view of antistatic property and charge-preventing property.

In the polymer saponified product (A) in the invention, the concentration of the potassium ion which exists as potassium carboxylate in the saponified product is in the range of 0.1 to 5.8 mol/kg, more preferably in the range of 1 to 3 mol/kg.
When the concentration of the potassium ion is in the above-mentioned lower limit or more, a surface resistivity of about 10¹⁴ Ω/square or less which is required for antistatic property may be obtained, whereas when the concentration of the potassium ion is in the above-mentioned upper limit or less, melting viscosity does not become too high, and forming property and processing property are fine.

The polymer saponified product in the invention preferably has a melt flow rate of 0.01 to 100 g/10 min, specifically 0.1 to 50 g/10 min at 230°C under the loading of 10 kg (which complies with JIS K7210-1999) in view of forming property and processing property.

In the invention, among the polymer saponified products, a polymer saponified product that the ratio of the molar amount of the potassium ion which exists as potassium carboxylate after saponification is within the range of 0.1 to 0.6 with respect to the molar amount of the whole unsaturated carboxylic acid ester group units in the ethylene-unsaturated carboxylic acid ester copolymer to be saponified with potassium, namely, a polymer saponified product having a saponification degree in the range of 10 to 90%, preferably 20 to 80%, more preferably 30 to 70% is preferable from the viewpoint of antistatic property and miscibility with other resin.
Meanwhile, since the ester component in the copolymer is partially changed to a potassium salt component by the saponification reaction with potassium in the invention, the saponified product becomes a copolymer containing ethylene units, unsaturated carboxylic acid ester units and unsaturated potassium carboxylate units, and does not contain free carboxyl group units.
The polymer potassium saponified product of the invention may impart antistatic property without substantially impairing its physical characteristics such as impact resistance including IZOD impact strength even if it is blended with polystyrene.

The saponification of the ethylene-unsaturated carboxylic acid ester copolymer with potassium may be carried out by using caustic alkali or the like by a method known per se. For example, as a method for saponification with potassium, a method for melt-mixing an ethylene-unsaturated carboxylic acid ester copolymer and a predetermined amount of a caustic alkali such as potassium hydroxide in a kneading apparatus such as an extruder, a kneader and a Banbury mixer, for example, under a temperature of 100 to 250°C, or melt-homogenizing the ethylene-unsaturated carboxylic acid ester copolymer in the above-mentioned kneading apparatus, and adding a predetermined amount of caustic alkali such as potassium hydroxide to react the ester group of the ethylene-unsaturated carboxylic acid ester copolymer and caustic alkali and to give a saponified product may be exemplified.

The invention is a styrene-based resin-containing composition including the above-mentioned polymer saponified product (A) in an amount of 2 parts by mass or more and less than 100 parts by mass and the styrene-based resin (B) in an amount of more than 0 parts by mass and 98 parts by mass or less. When the polymer saponified product (A) is lower than 2 parts by mass and the styrene-based resin (B) is more than 98 parts by mass, fine antistatic property may not be obtained.
In the invention, 99 to 2 parts by mass of the polymer saponified product (A) and 1 to 98 parts by mass of the styrene-based resin (B), specifically 90 to 3 parts by mass of the polymer saponified product (A) and 10 to 97 parts by mass of the styrene-based resin (B) are preferable from the viewpoint of forming property, processing property and miscibility with other resin of the material.

The styrene-based resin which is the component (B) used for the invention (hereinafter sometimes referred to as "component B") is a homopolymer or copolymer of styrene, and as the typical examples thereof, ABS-based resins and polystyrene may be exemplified. In the invention, the component B is preferably a styrene-based copolymer in which at least acrylonitrile and styrene are copolymerized in view of effect.
As used herein, the ABS-based resin is a collective term of rubber-reinforced styrene-based polymers which are synthesized by various production methods such as blending method, grafting method or grafting-blending method, and typical examples may include those obtained by graft polymerization of a rubber component such as polybutadiene, styrenebutadiene rubber and ethylene-propylene-diene rubber with styrene and other monomer such as an acrylonitrile, a methyl methacrylate, an α-methylstyrene, an ethylenebismaleimide and a maleimide.

Furthermore, polystyrene is a collective term of general polystyrenes which are synthesized by a production method such as suspension polymerization method and continuous polymerization method, high impact polystyrenes obtained by graft polymerization of a rubber component such as a butadiene rubber with styrene, and the like. Among these styrene-based resins, a diene rubber-reinforced ABS-based resin is preferable, and specifically, a styrene-based resin including units derived from styrene and units derived from acrylonitrile is preferable.

As a method for obtaining the above-mentioned styrene-based resin-containing composition, a method for melt-mixing a polymer saponified product prepared in advance and a styrene-based resin with a single screw extruder, a twin screw extruder, a Banbury mixer, a kneader or the like may be exemplified.

Various additives may be incorporated into the styrene-based resin-containing composition of the invention to the extent that the purpose of the invention is not impaired.
Examples of such additives may include an antioxidant, an anti-aging agent, a photostabilizer, a heat stabilizer, an ultraviolet absorber, a lubricant, an antiblocking agent, a plasticizer, an adhesive, an inorganic filler, reinforcing fibers such as glass fibers and carbon fibers, a pigment, a dye, a flame retardant, a flame retardant aid, a foaming agent, a foaming aid and the like.
In addition, a small amount of a general antistatic additive(agent) may also be incorporated.

The styrene-based resin-containing composition of the invention may be utilized as a polymer type antistatic additive(agent) by utilizing the excellent antistatic property thereof. In such case, the styrene-based resin-containing composition of the invention which is used as a polymer type antistatic additive(agent) is incorporated so as to obtain the potassium ion concentration of 0.002 to 5.8 mol/kg in a final resin composition.
For example, when 1 part by mass of the styrene-based resin-containing composition of the invention having excellent antistatic property is incorporated into 99 parts by mass of the styrene-based resin, if the styrene-based resin-containing composition of the invention is adjusted so as to have a potassium ion concentration of 0.2 mol/kg and incorporated, the potassium ion concentration in the whole final composition becomes 0.002 mol/kg, whereby antistatic property may be exhibited.
The method for incorporating the styrene-based resin-containing composition of the invention into other resin is not specifically limited. For example, a method for producing pellets of the styrene-based resin-containing composition of the invention having been adjusted so as to have a potassium ion concentration which corresponds to the antistatic property required for a final composition, and utilizing the pellets for incorporation into other resin as a polymer antistatic additive(agent) is exemplified.

### EXAMPLES

Next, the present invention is further explained in detail with referring to Examples. However, the invention is not limited at all by these examples.
The raw materials used in the following Examples and Comparative Examples, and methods for evaluation of the synthesized polymer saponified products and polymer compositions are as follows.

### 1. Raw materials used

i) Ethylene-methyl acrylate copolymer (EAC1): methyl acrylate (MA) content; 30% by mass, MFR; 15 g/10 min (190°C, loading of 2160 g, complied with JIS K7210-1999)
ii) Ethylene-methyl acrylate copolymer (EAC2): methyl acrylate (MA) content; 24% by mass, MFR; 50 g/10 min (190°C, loading of 2160 g, complied with JIS K7210-1999)
iii) Ethylene-ethyl acrylate copolymer (EAC3): ethyl acrylate (EA) content; 25% by mass, MFR; 800 g/10 min (190°C, loading of 2160 g, complied with JIS K7210-1999)
iv) Ethylene-ethyl acrylate copolymer (EAC4): ethyl acrylate (EA) content; 30% by mass, MFR; 1250 g/10 min (190°C, loading of 2160 g, complied with JIS K7210-1999)
v) Ethylene-ethyl acrylate copolymer (EAC5): ethyl acrylate (EA) content; 26% by mass, MFR; 250 g/10 min (190°C, loading of 2160 g, complied with JIS K7210-1999)
vi) Acrylonitrile-butadiene-styrene copolymer (ABS1): manufactured by Technopolymer Co., Ltd., trade name: TECHNO ABS 520, MFR 9 g/10 min (220°C, loading of 98N, complied with ISO 1131), density 1.05 g/cm³ [the physical characteristic values are based on a product catalog]
vii) Acrylonitrile-butadiene-styrene copolymer (ABS2): manufactured by Technopolymer Co., Ltd., trade name: TECHNO ABS330, MFR 42 g/10 min (220°C, loading of 98 N, complied with ISO 1131), density 1.05 g/cm³ [the physical characteristic values are based on a product catalog]
viii) Polystyrene (PS): manufactured by Japan Polystyrene Inc., trade name: G440K, MFR 9 g/10 min (200°C, loading of 49 N, complied with ISO 1131) [the physical characteristic values are based on a product catalog]
ix) High impact polystyrene (HIPS): manufactured by Japan Polystyrene Inc., trade name: H430, MFR 7.5 g/10 min (200°C, loading of 49 N, complied with ISO 1131), [the physical characteristic values are based on a product catalog]

### 2. Evaluation items and evaluation methods

(i) Antistatic property (surface resistivity):
   An injection-molded sheet having a thickness of 2 mm was aged under a constant temperature and a constant humidity (23°C, 50% RH) for 24 hours, and the surface resistivity [Ω/square] of the sample was measured by using an electric resistance measurement apparatus Hiresta manufactured by Mitsubishi Chemical Corporation, under conditions of an applied voltage of 500 V and an application time for 10 seconds. The measurement limit of this electric resistance measurement apparatus was 1.0 × 10⁷ Ω/square.
(ii) Potassium ion concentration:
   The potassium ion amount (potassium ion concentration) in the polymer saponified product or a styrene-based resin-containing composition was measured by the following method.
   A sample was subjected to a demetalation treatment with hydrochloric acid using a mixed solvent of xylene/butanol and titrated with a thymol blue indicator, and the amount (molar amount) of the generated carboxylic acid group (COOH) was measured. Based on that the amount (molar amount) of the generated carboxylic acid group (COOH) is equivalent to the molar amount of COOK, the molar amount (potassium ion concentration) of COOK per 1 kg of the sample was calculated from the molar amount of the generated carboxylic acid group (COOH).
(iii) Method for production of injection-molded sheet:
   The obtained composition was injection-molded under a molding temperature of 240°C and a mold temperature of 45°C to form a sheet of 80 mm × 150 mm × 2 mm.

### Experimental Example 1

10 Kg of an ethylene-methyl acrylate copolymer (EAC1) as a material resin (base resin) for the preparation of a saponified product and 780 g of potassium hydroxide (KOH) were fed into a kneading apparatus, and EAC1 and potassium hydroxide (KOH) were melted and reacted in the kneading apparatus and extruded to obtain a polymer saponified product (sample 1). The concentration of potassium ion (amount of K ion) which exists in the form of potassium acrylate in the saponified product was 1.40 mol/kg, and the ratio of the molar amount of the potassium ion existing in the saponified product with respect to the molar amount of the whole acrylic acid ester group units of the above-mentioned ethylene-acrylic acid methyl copolymer (EAC1) before saponification (percentage: hereinafter this is referred to as a saponification ratio (saponification degree)) was 40%. The result is shown in the following Table 1.

### Experimental Examples 2 to 7

Polymer saponified products were synthesized in a similar manner to Experimental Example 1, except that the base resins as shown in Experimental Example 2 to Experimental Example 7 in the following Table 1 were respectively used, and the added amount of potassium hydroxide was changed according to each base resin and objective saponification ratio. The result is shown in the following Table 1.

### (Example 1)

5 parts by mass of the sample 1 which was synthesized in Experimental Example 1 and 95 parts by mass of ABS were melt-kneaded by using an extruder to give a polymer composition. The concentration of K ion existing in the form of an acrylic acid salt in the polymer composition was 0.07 mol/kg.
The composition was injection-molded to form a sheet, and the surface resistivity of the obtained sheet was measured. The result is shown in the following Table 2.

### (Examples 2 to 10)

The examples were carried out in a similar manner to Example 1, except that the polymer saponified product (A) in Example 1 was changed to one having the saponified product number described in the following Table 2 and the incorporation amount was changed to the ratio described in the following Table 2. The results are shown in the following Table 2.

### (Comparative Examples 1 and 2)

A sheet was formed by using the ABS described in the following Table 2 directly for injection molding without incorporating the polymer saponified product (A) in Example 1, and the surface resistivity of the injection-molded sheet was measured. The results are shown in the following Table 2.

### (Example 11)

A polymer composition was obtained by dry blending with changing the polymer saponified product (A) in Example 1 to one having the saponified product number described in the following Table 3 and changing the incorporation amount to the ratio described in the following Table 3, and an injection-molded sheet was prepared in a similar manner to Example 1. The surface resistivity of the obtained sheet was measured. The result is shown in the following Table 3.

### (Example 12)

This example was carried out in a manner similar to Example 1 with changing the polymer saponified product (A) in Example 1 to one having the saponified product number described in the following Table 4 and changing the incorporation amount to the ratio described in the following Table 4. However, the antistatic property was evaluated under the condition of 23°C and 50% RH, as well as under the condition of 23°C and 30% RH. The result is shown in the following Table 4.

### (Example 13)

This example was carried out in a manner similar to Example 1 with changing the polymer saponified product (A) in Example 1 to one having the saponified product number described in the following Table 5 and changing the incorporation amount to the ratio described in the following Table 5. The result is shown in the following Table 5.

### (Examples 14 and 15)

These examples were carried out in a manner similar to Example 1 with changing the polymer saponified product (A) in Example 1 to one having the saponified product number described in the following Table 6, changing ABS which is the styrene-based resin (B) to PS (polystyrene), and changing the incorporation amount to the ratio described in the following Table 6. The results are shown in the following Table 6.

### (Examples 16 and 17)

These examples were carried out in a manner similar to Example 1 with changing the polymer saponified product (A) in Example 1 to one having the saponified product number described in the following Table 7, changing ABS which is the styrene-based resin (B) to HIPS (high impact polystyrene), and changing the incorporation amount to the ratio described in the following Table 7. The results are shown in the following Table 7.

### (Comparative Example 3)

A sheet was formed by using PS for injection molding directly without incorporating the polymer saponified product (A) in Example 14, and the surface resistivity of the injection-molded sheet was measured. The results are shown in the following Table 6.

### (Comparative Example 4)

A sheet was formed by using HIPS for injection molding directly without incorporating the polymer saponified product (A) in Example 16, and the surface resistivity of the injection-molded sheet was measured. The results are shown in the following Table 7.

**[Table 1]**

| Experimental Example | Base resin | Composition ratio of base resin | Saponification degree | Ester type | Metal type | Metal ion concentration [mol/kg] | Saponified product number |
|---|---|---|---|---|---|---|---|
| 1 | EAC1 | - | 40% | MA | K | 1.40 | Sample 1 |
| 2 | EAC1 | - | 50% | " | " | 1.70 | Sample 2 |
| 3 | EAC3 | - | 60% | EA | " | 1.50 | Sample 3 |
| 4 | EAC5 | - | 70% | " | " | 1.82 | Sample 4 |
| 5 | EAC1/EAC4 | 7/3 | 50% | EA/M A | " | 1.64 | Sample 5 |
| 6 | EAC1/EAC4 | 7/3 | 60% | " | " | 2.01 | Sample 6 |
| 7 | EAC2/EAC4 | 7/3 | 60% | " | " | 1.73 | Sample 7 |

**[Table 2]**

| | Polymer saponified product (A) | Styrene -based resin (B) | Composition ratio [parts by mass] (A)/(B) | Metal type | Metal ion concentration [mol/kg] | Surface resistivity [Ω/square] |
|---|---|---|---|---|---|---|
| | | | | | | 23°C×50 RH |
| Example 1 | Sample 1 | ABS1 | 5/95 | K | 0.07 | 1.63×10¹² |
| Example 2 | Sample 1 | ABS1 | 10/90 | " | 0.14 | 1.97×10⁹ |
| Example 3 | Sample 2 | ABS1 | 5/95 | " | 0.085 | 4.8×10¹⁰ |
| Example 4 | Sample 2 | ABS1 | 10/90 | " | 0.17 | 4.48×10⁸ |
| Example 5 | Sample 3 | ABS1 | 10/90 | " | 0.15 | 7.2×10¹¹ |
| Example 6 | Sample 3 | ABS1 | 20/80 | " | 0.30 | 1.52×10⁸ |
| Example 7 | Sample 4 | ABS2 | 3/97 | " | 0.053 | 4.4×10¹² |
| Example 8 | Sample 5 | ABS1 | 5/95 | " | 0.082 | 2.68×10⁹ |
| Example 9 | Sample 6 | ABS1 | 5/95 | " | 0.101 | 6.77×10⁹ |
| Example 10 | Sample 7 | ABS1 | 5/95 | " | 0.087 | 1.70×10⁹ |
| Comparative Example 1 | 0 | ABS1 | 0/100 | - | - | 1.0×10¹⁴< |
| Comparative Example 2 | 0 | ABS2 | 0/100 | - | - | 1.0×10¹⁴< |

**[Table 3]**

| | Polymer saponified product (A) | Styrene-based resin (B) | Composition ratio [parts by mass] (A)/(B) | Metal type | Metal ion concentration [mol/kg] | Surface resistivity [Ω/square] |
|---|---|---|---|---|---|---|
| | | | | | | 23°C×50 RH |
| Example 11 | Sample 2 | ABS1 | 5/95 | K | 0.085 | 2.5×10¹² |

**[Table 4]**

| | Polymer saponified product (A) | Styrene-based resin (B) | Composition ratio [parts by mass] | Metal type | Metal ion concentration [mol/kg] | Surface resistivity [Ω/square] | |
|---|---|---|---|---|---|---|---|
| | | | | | | 23°C ×50 RH | 23°C ×30 RH |
| Example 12 | Sample 2 | ABS1 | 20/80 | K | 0.34 | 1.0×10⁷> | 1.0×10⁷> |

**[Table 5]**

| | Polymer saponified product (A) | Styrene-based resin (B) | Composition ratio [parts by mass] (A)/(B) | Metal type | Metal ion concentration [mol/kg] | Surface resistivity [Ω/square] |
|---|---|---|---|---|---|---|
| | | | | | | 23°C×50 RH |
| Example 13 | Sample 2 | ABS1 | 50/50 | K | 0.85 | 1.0×10⁷> |

**[Table 6]**

| | Polymer saponified product (A) | Styrene-based resin (B) | Composition ratio [parts by mass] (A)/(B) | Metal type | Metal ion concentration [mol/kg] | Surface resistivity [Ω/square] |
|---|---|---|---|---|---|---|
| | | | | | | 23°C×50 RH |
| Example 14 | Sample 3 | PS | 10/90 | K | 0.15 | 1.2×10⁹ |
| Example 15 | Sample 2 | PS | 50/50 | " | 0.75 | 1.0×10⁷> |
| Comparative Example 3 | 0 | PS | 0/100 | - | - | 1.0×10¹⁴< |

**[Table 7]**

| | Polymer saponified product (A) | Styrene-based resin (B) | Composition ratio [parts by mass] (A)/(B) | Metal type | Metal ion concentration [mol/kg] | Surface resistivity [Ω/square] |
|---|---|---|---|---|---|---|
| | | | | | | 23°C×50 RH |
| Example 16 | Sample 3 | HIPS | 10/90 | K | 0.15 | 6.0×10⁸ |
| Example 17 | Sample 2 | HIPS | 50/50 | " | 0.75 | 1.0×10⁷> |
| Comparative Example 4 | 0 | HIPS | 0/100 | - | - | 1.0×10¹⁴< |

The entire disclosure of Japanese Patent Application No. 2008-198485 is incorporated herein into this specification by reference.
All documents, patent applications and technical specifications recited in this specification are incorporated herein by reference in this specification to the same extent as if each individual publication, patent applications and technical standard was specifically and individually indicated to be incorporated by reference.

## Claims

1. A styrene-based resin-containing composition comprising:
(A) a polymer saponified product which is obtained by saponifying an ethylene-unsaturated carboxylic acid ester copolymer with potassium and has a potassium ion concentration in the range of 0.1 to 5.8 mol/kg, in an amount of 2 parts by mass or more and less than 100 parts by mass, and
(B) a styrene-based resin, in an amount of more than 0 parts by mass and 98 parts by mass or less,
the composition having a potassium ion concentration of 0.002 to 5.8 mol/kg.

2. The styrene-based resin-containing composition according to claim 1, wherein when the composition is formed into a sheet having a thickness of 2 mm by injection molding, the sheet has a surface resistivity, which is measured under conditions of an applied voltage of 500 V and an application time of 10 seconds after aging at 23°C under 50% RH for 24 hours, of 1.0 × 10¹⁴ Ω/square or less.

3. The styrene-based resin-containing composition according to claim 1, wherein the ethylene-unsaturated carboxylic acid ester copolymer to be saponified with potassium is an ethylene-(meth)acrylic acid ester copolymer.

4. The styrene-based resin-containing composition according to claim 1, wherein the content ratio of constituent units derived from the unsaturated carboxylic acid ester in the ethylene-unsaturated carboxylic acid ester copolymer to be saponified with potassium is in the range of 5 to 50% by mass.

5. The styrene-based resin-containing composition according to claim 1, wherein the styrene-based resin (B) is a styrene-based copolymer comprising at least constituent units derived from acrylonitrile and constituent units derived from styrene.

6. The styrene-based resin-containing composition according to claim 4, wherein the content ratio of the constituent units derived from the unsaturated carboxylic acid ester is in the range of 20 to 35% by mass.

7. The styrene-based resin-containing composition according to claim 1, wherein the content of the polymer saponified product (A) is 90 to 3 parts by mass, and the content of the styrene-based resin (B) is 10 to 97 parts by mass.

8. The styrene-based resin-containing composition according to claim 1, wherein the potassium ion concentration of the polymer saponified product (A) is in the range of 1 to 3 mol/kg.

9. The styrene-based resin-containing composition according to claim 1, wherein the saponification degree of the polymer saponified product (A) is in the range of 10 to 90%.

10. A formed article comprising the styrene-based resin-containing composition according to claim 1.
